# EUROPEAN PATENT SPECIFICATION

(11) **EP 1 351 328 B1**
(45) Date of publication and mention of the grant of the patent: **30.03.2011**
(21) Application number: 02729526.0
(22) Date of filing: 09.01.2002
(51) Int. Cl.: H01M 8/00, H01M 8/04, H01M 8/10

(54) **SOLID HIGH POLYMER TYPE FUEL CELL POWER GENERATING DEVICE**
FEST-HOCHPOLYMER-BRENNSTOFFZELLEN-STROMVERSORGUNGSSYSTEM
DISPOSITIF DE PRODUCTION DE PUISSANCE PAR PILE A COMBUSTIBLE A ELECTROLYTE HAUT POLYMERE SOLIDE

(30) Priority: 12.01.2001 JP 2001005782; 15.01.2001 JP 2001006349; 15.01.2001 JP 2001006482
(43) Date of publication of application: 08.10.2003
(73) Proprietor: Eneos Celltech Co., Ltd., Minato-ku, Tokyo, (JP)
(72) Inventor: TAJIMA, Osamu c/o Sanyo Electric Co., Ltd., Moriguchi-shi, Osaka 570-0083 (JP); ODA, Katsuya c/o Sanyo Electric Co., Ltd., Moriguchi-shi, Osaka 570-0083 (JP); HATAYAMA, Tatsuji c/o Sanyo Electric Co., Ltd., Moriguchi-shi, Osaka 570-0083 (JP); YUKAWA, Tatsuji c/o Sanyo Electric Co., Ltd., Moriguchi-shi, Osaka 570-0083 (JP); OUKI, Taketoshi c/o Sanyo Electric Co., Ltd., Moriguchi-shi, Osaka 570-0083 (JP); FUJU, Akira c/o Sanyo Electric Co., Ltd., Moriguchi-shi, Osaka 570-0083 (JP); SHINDO, Kouji c/oSanyo Electric Co., Ltd., Moriguchi-shi, Hiroshima 570-0083 (JP); TAJIMA, Kazuhiro c/o Sanyo Electric Co., Ltd., Moriguchi-shi, Osaka 570-0083 (JP); YAMAMOTO, Satoshi c/o Sanyo Electric Co., Ltd., Moriguchi-shi, Osaka 570-0083 (JP); MAKIHARA, Katsuyuki c/o Sanyo Electric Co., Ltd., Moriguchi-shi, Osaka 570-0083 (JP); MIYAI, Keigo c/o Sanyo Electric Co., Ltd., Moriguchi-shi, Osaka 570-0083 (JP); KADOWAKI, Masataka c/o Sanyo Electric Co., Ltd., Moriguchi-shi, Osaka 570-0083 (JP); UEDA, Masatoshi c/o Sanyo Electric Co., Ltd., Moriguchi-shi, Osaka 570-0083 (JP)
(74) Representative: Glawe, Delfs, Moll
(86) International application number: PCT/JP2002/000053
(87) International publication number: WO 2002/056403

(56) References cited:
- EP-A- 0 295 629
- JP-A- 7 220 745
- JP-A- 8 273 689
- JP-A- 11 097 044
- JP-A- 2000 285 942
- JP-A- 2000 285 942
- JP-A- 2001 291 525
- US-A- 5 360 679

## Description

### FIELD OF THE INVENTION

The present invention relates to a proton-exchange membrane fuel cell power generating equipment suitable as a small power supply equipment for household use, for example, and an exhaust heat recovery device.

### BACKGROUND ART

Recently, a proton-exchange membrane fuel cell power generating equipment suitable as a small power supply equipment is proposed which comprises a reformer for reforming fuel gas such as natural gas, town gas, methanol, liquefied petroleum gas (LPG), or butane to hydrogen rich gas, a CO transformer for transforming carbon monoxide to CO₂, a CO removing apparatus for removing the carbon monoxide, a process gas burner for burning hydrogen until each reactor becomes stable in starting operation, a fuel cell for chemically reacting the hydrogen obtained in such a manner with oxygen in the air to generate power, a water tank for storing water (pure water) that is treated by a water treating apparatus using ion-exchange resin or the like to cool an electrode part of the fuel cell and moisten reaction air, a heat exchanger for recovering heat of exhaust gas of the reformer, the fuel cell, the process gas burner, or the like to produce hot water and a hot water reserving tank for reserving hot water.

A solid polymer electrolyte membrane used in a proton-exchange membrane fuel cell power generating equipment functions as a proton conductive electrolyte by containing water. The proton-exchange membrane fuel cell is operated by saturating reaction air or reaction gas such as fuel gas with steam and supplying it to the electrode part.

When fuel gas containing hydrogen is fed to a fuel electrode and the air is fed to an air electrode, a fuel electrode reaction for decomposing hydrogen molecules to hydrogen ions and electrons is performed in the fuel electrode, and an electrochemical reaction for generating water from oxygen with hydrogen ions in the air electrode. Thus, the electrons moving through an external circuit from the fuel electrode to the air electrode carry power to a load to generate water on the air electrode side.

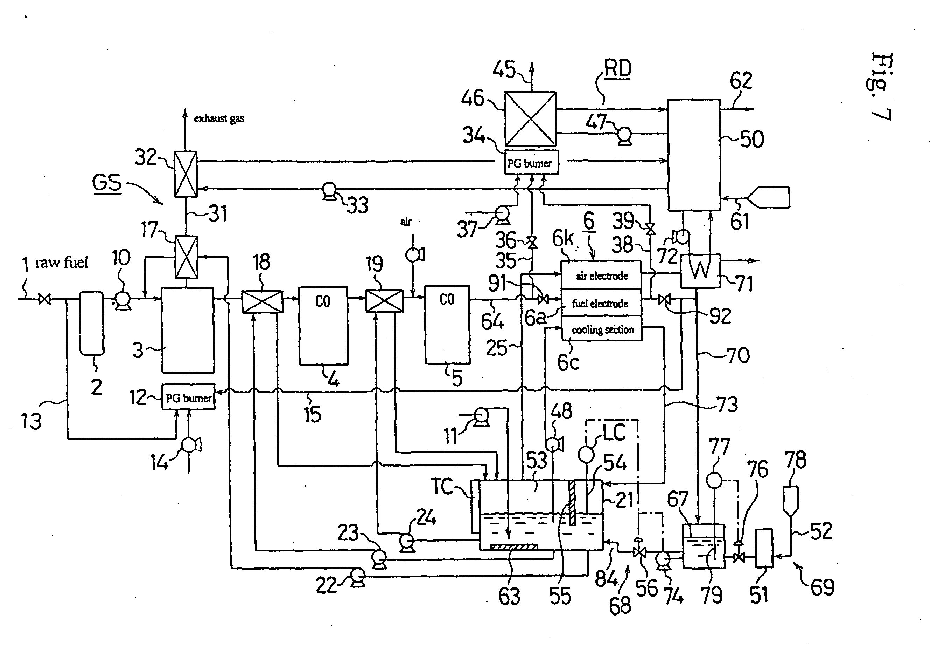

Fig. 7 is the system diagram of a conventional proton-exchange membrane fuel cell power generating equipment (PEFC equipment GS).

The PEFC equipment GS using a fuel cell 6 includes, for example, an exhaust heat recovery device RD in addition to the fuel cell 6.

The exhaust heat recovery device RD is coupled to a hot water reserving tank 50, heat exchanges 32, 46, 71, and pumps 33, 47, 72 through a hot water circuit or the like.

The fuel cell 6 has a fuel gas feeding apparatus comprising the desulfurizer 2, the reformer 3, the CO transformer 4, the CO removing apparatus 5, and the like, a reaction air feeding apparatus comprising the air pump 11, the water tank 21, and the like, a electrodes such as the fuel electrode 6a and the air electrode 6k, and a cooling apparatus of the fuel cell 6 comprising the water tank 21, the pump 48, the cooling section 6c, and the like.

Power generated by the fuel cell 6 is increased in pressure by the direct current (DC) /DC converter (not shown), and is supplied to die commercial power supply via the electric distribution system cooperation inverter (not shown). The power is supplied from the power supply to houses or offices to be used for illumination or electric equipment such as air conditioners.

The PEFC equipment GS using the fuel cell 6 generates power and effectively uses heat generated at the same time to produce hot water from city water, accumulates the hot water in the hot water reserving tank 50, and supplies the hot water to bath or kitchen.

In the fuel gas feeding apparatus of the PEFC equipment GS, raw fuel 1 such as natural gas, town gas, methanol, LPG, or butane is supplied to the desulfurizer 2, and here sulfur components are removed from the raw fuel.

The raw fuel having passed through the desulfurizer 2 is pressurized by a pressurizing pump 10 and supplied to the reformer 3. The raw fuel, while being supplied, mixed with steam produced by feeding hot water from the water tank 21 through a water pump 22 and heating the hot water in a heat exchanger 17. The reformer 3 produces reformed gas containing hydrogen, carbon dioxide, and carbon monoxide. The reformed gas produced in the reformer 3 is supplied to the CO transformer 4, and here the carbon monoxide contained in the reformed gas is transformed to carbon dioxide. The gas from the CO transformer 4 is supplied to the CO removing apparatus 5. In the CO removing apparatus 5, untransformed carbon monoxide in the gas supplied from the CO transformer 4 is reduced to 10 ppm or less, and water gas (reformed gas) having high hydrogen concentration is supplied to the fuel electrode 6a of the fuel cell 6 through a pipe 64.

At this time, an amount of the hot water supplied from the water tank 21 to the reformer 3 is adjusted to control moisture concentration in reformed gas.

In the reaction air feeding apparatus, air is fed from the air pump 11 to the water tank 21, and the reaction air is whipped in the hot water in the water tank 21 and is fed to a gas phase section 53, thereby moistening the reaction air.

The moistened reaction air so as to keep reaction properly in the fuel cell 6 is fed to the air electrode 6k of the fuel cell 6 from the water tank 21 through a pipe 25.

The fuel cell 6 generates power by an electrochemical reaction of the hydrogen of the reformed gas fed to the fuel electrode 6a with oxygen in the air supplied to the air electrode 6k through the air pump 11 and the gas phase section 53 in the water tank 21.

The cooling apparatus of the fuel cell 6 is arranged along with the electrodes 6a, 6k of the fuel cell 6, and prevents the fuel cell 6 from being overheated by heat of the electrochemical reaction. The cooling apparatus circulates the hot water in the water tank 21 as a coolant to a cooling section 6c with a pump 48, and the coolant keeps temperature properly in the fuel cell 6 at a temperature (for example, 70 - 80 °C) preferable for the power generation.

The chemical reaction in the reformer 3 is an endothermic reaction, so that a burner 12 for continuing the chemical reaction while overheating is provided. To the burner 12, the raw fuel is supplied through a pipe 13, air is fed through a fan 14, and the unreacted hydrogen is supplied from the fuel electrode 6a through a pipe 15. In starting time of the PEFC equipment GS, the raw fuel is supplied through the pipe 13 to the burner 12. When temperature of the fuel cell 6 becomes stable after a certain time from the starting operation, supply of the raw fuel through the pipe 13 is stopped, and, instead of that, the unreacted hydrogen (off-gas) discharged from the fuel electrode 6a is supplied through the pipe 15 to continue the combustion.

The chemical reactions performed in the CO transformer 4 and the CO removing apparatus 5 are exothermic reactions. During the operation, cooling control is performed to prevent heat by the exothermic reactions from increasing the temperature to a reaction temperature or higher.

Predetermined chemical reactions and power generation are thus continued in the reformer 3, the CO transformer 4, the CO removing apparatus 5, and the fuel cell 6.

Heat exchangers 18 and 19 are installed between the reformer 3 and the CO transformer 4, and between the CO transformer 4 and the CO removing apparatus 5, respectively.

The hot water supplied from the water tank 21 circulates in the respective heat exchangers 18, 19 via pumps 23, 24, and cools respective gasses fed from the reformer 3 and the CO transformer 4. Another heat exchanger (not shown) may be also installed between the CO removing apparatus 5 and the fuel cell 6 to cool gas fed from the CO removing apparatus 5.

The heat exchanger 17 is connected to an exhaust system 31 of the reformer 3. When the hot water is supplied from the water tank 21 via a pump 22, the heat exchanger 17 vaporizes the water to produce steam, and the steam mixes with the raw fuel and is fed to the reformer 3.

The PEFC equipment GS has a process gas burner (PG burner) 34.

In starting tune of the PEFC equipment GS, the composition of the reformed gas fed through the reformer 3, the CO transformer 4, and the CO removing apparatus 5 does not reach a defined stable value preferable for the operation of the fuel cell 6. Therefore, the gas cannot be fed to the fuel cell 6 until the composition becomes stable. Until each reactor becomes stable, the gas of composition that does not reach the defined value is guided to the PG burner 34 and burned in it. The fan 37 is used for feeding air for combustion to the PG burner 34.

The gas is guided to the fuel cell 6 for power generation after each reactor becomes stable and the CO concentration in the gas reaches a defined value (for example, 10 - 20 ppm or lower). Unreacted gas (off-gas) that cannot be used for the power generation in the fuel cell 6 is initially guided to the PG burner 34 and burned, and, after the temperature of the fuel cell 6 becomes stable, it is guided to the burner 12 of the reformer 3 through a pipe 15.

Until each reactor becomes stable in temperature after a certain time from the starting operation of the PEFC equipment GS, the on-off valve 91 is closed, and the reformed gas is fed to the PG burner 34 through the duct 35 and the on-off valve 36.

Even after each reactor becomes stable in temperature, until the temperature of the fuel cell 6 becomes stable in the temperature range of near an yield temperature (for example, 70 - 80 °C), the on-off valve 91 is opened while the on-off valve 92 is closed, and the reformed gas is fed to the PG burner 34 through a duct 38 and an on-off valve 39 and burned in it.

When the temperature of the fuel cell 6 is stable in the range of an yield temperature and continuous power generation is performed, both the on-off valve 91 and the on-off valve 92 are opened while the on-off valve 36 and the on-off valve 39 are closed, and the unreacted gas (off-gas) fed from the fuel cell 6 is fed to the burner 12 through a duct 15.

City water is supplied to the hot water reserving tank 50 through the aqueduct 61. The city water supplied to the hot water reserving tank 50 is heated by exhaust heat generated from the PEFC equipment GS, and the heated water is supplied to the indoor places such as kitchen, lavatory, or bath through the hot water supply pipe 62.

For example, the exhaust system 31 is connected to another heat exchanger 32 in addition to the heat exchanger 17, and the water in the hot water reserving tank 50 circulates in the heat exchanger 32 via the pump 33 for exhaust heat recovery.

The heat exchanger 46 is connected to the exhaust system 45 of the PG burner 34, and the water in the hot water reserving tank 50 circulates in the heat exchanger 46 via the pump 47 for exhaust heat recovery in the hot water reserving tank 50.

Water returned through the heat exchangers 18, 19 by the pumps 23, 24, 48, or coolant circulating in the cooling section 6c of the fuel cell 6 flow into the water tank 21 through the water duct 73, and the water refilling apparatus 68 for supplying water to the water tank 21 is connected to the water tank 21.

The water refilling apparatus 68 comprises the electromagnetic valve 56, the supply tank 67, and the pump 74. The supply tank 67 temporarily reserves water generated from city water refilling apparatus 69 and the fuel cell 6 through a pipe 70, and supplies water to the water tank 21.

Water generated from the fuel cell 6 includes the drain water obtained by cooling system between the heat exchanger 71 and the hot water reserving tank 50 to cool the gas exhausted from the air electrode 6k circulating by the pump 72 and the water contained in the gas exhausted from the fuel electrode 6a.

The city water refilling apparatus 69 is connected to the water source 78 via the aqueduct 52 having the electromagnetic valve 76 which opens the electromagnetic valve 76 by the water level controller 77 when the water level gauge 79 detects whether the amount of water in the supply tank 67 decreases to lower than the predetermined level or not and refills water to the supply tank 67 through the aqueduct 52 and water treating apparatus (ion-exchange resin) 51 with the use of water pressure of the water source 78, then keeps the water amount enough for feeding to the water tank 21.

The water tank 21 comprises a water level controller LC keeping the water level to form the air section (gas phase section) 53 in the upper part in the tank and a temperature adjusting apparatus TC keeping the water temperature of the water tank 21 in the predetermined range.

The water level controller LC comprises a water level gauge 54 and the electromagnetic valve 56 for constant monitoring of the water amount in the water tank 21, reserves water in the tank so that air for reaction is properly moisturized during passing through the air in the water tank 21 and supplied to the fuel cell 6, and controls the water amount so as to form the gas phase section 53 in the upper part. When the water level lowers, the water level controller LC operates the pump 74, adjusts the opening of the electromagnetic valve 56 to feed treated water from the supply tank 67 through the pipe 84, then keeps the water level in the water tank 21 within the predetermined range.

The wave breaking plate 55 prevents the water level detection by the water level gauge 54 from being destabilized by forming.

The temperature control apparatus TC keeps water temperature in the temperature range in the water tank 21 (predetermined temperature), for example 60 - 80 °C , so as to properly moisturize the reaction air supplied to the air electrode 6k of the fuel cell 6.

Water temperature is controlled by the heating device 63 installed in the water tank 21 if necessary.

The heat exchange between the water in the hot water reserving tank 50 and the heat exchanger in the fuel cell power generating equipment GS, as shown in Fig. 7, uses the first circuit R1 between the tank and the first heat exchange 32 through which combustion exhaust gas by the burner 12 of the reformer 3 in a reforming apparatus passes, the second circuit R2 between the tank and the second heat exchange 46 through which combustion exhaust gas by the PG burner 34 passes, and the third circuit R3 between the tank and the third heat exchange 71 through which non-reacted oxygen gas exhausted from the air electrode of the fuel cell 6 passes. In other words, the heat exchange is performed between the water fed from the hot water reserving tank 50 and the combustion exhaust gas or unreacted oxygen gas in each of the first heat exchange 32, the second heat exchange 46, and the third heat exchange 71.

The PEFC equipment GS as discussed above has a configuration of a cogeneration system of power generation and heat utilization, so that a power generating efficiency of a fuel cell is increased and water applied in the system is effectively recycled.

However, when the hot water reserving tank 50 is filled with hot water of a predetermined temperature during operation of the fuel cell 6, and the hot water could not be discharged to the outside through the hot water supply pipe 62, exhaust gas of the PEFC equipment GS cannot be recovered. Therefore, in order to keep the temperature of the coolant in the fuel cell 6 at a predetermined temperature range, another cooling apparatus such as a radiator must be newly installed or the operation must be stopped. The new installation of the cooling apparatus such as the radiator has a disadvantage of increasing cost, and it makes downsizing of the PEFC equipment GS difficult.

In addition, if the water in the tank 21 decreases in temperature to freeze, for example, the water tank 21 and the fuel cell 6 may receive quite a critical damages as well as piping lines and valves resulting in a malfunction of equipment which could not start once again.

### DISCLOSURE OF THE INVENTION

It is an object of the invention to provide a proton-exchange membrane fuel cell power generating equipment suitable as a small power supply for household use, for example, which addresses the conventional problems discussed above, to be able to keep the temperature of the coolant of the fuel cell 6 in a predetermined temperature range without stopping operation of the power generating equipment even if no additional installing of cooling apparatus such as a radiator and even in the case that the hot water reserving tank 50 is filled with hot water of a predetermined temperature during operation and the hot water could not be dischateged to the outside through the hot water supply pipe 62.

It is another object of the invention to provide a reliable proton-exchange membrane fuel cell power generating equipment suitable as a small power supply for household use, for example, which addresses the conventional problems discussed above, to prevent freezing of a water system during stop operation of apparatus, to prevent damages from freezing of the water tank 21, the fuel cell 6, the hot water reserving tank 50, the heat exchangers 32, 46, 71, the piping system, the valves, the pumps, and the pipes in the water system.

City water layer of room temperature lies in the bottom of the hot water reserving tank 50, and a hot water layer with lower gravity by heating lies in the upper part. During nonsupply of hot water, the city water in the bottom is heated by the heat exchanger and moves to the upper part, so that hot water layer gradually increases and finally the tank is entirely filled with hot water layer. During supply of hot water, hot water in the upper part is taken out to gradually reduce hot water layer, and city water is added into the bottom following to the amount of hot water loss resulting in an increase of the city water layer. Therefore, temperature of the water fed from the bottom of the hot water reserving tank 50 to the heat exchangers is not constant, and heat exchanging efficiencies of the heat exchangers are always different. Combustion exhaust gases passing through the three heat exchangers 32, 46, 71 contain unreacted oxygen gases having different temperatures, the heat exchanging efficiencies fluctuate according to the temperature variation of water fed from the hot water reserving tank 50, resulting in low efficiency when the temperature difference is small.

It is still another object of the invention to provide an improved exhaust heat recovering method for a fuel cell power generating equipment allowing efficient heat exchange function between the hot water reserving tank and plural heat exchangers of the fuel cell power generating equipment.

The proton-exchange membrane fuel cell power generating equipment in accordance with the claim 1 of the present invention comprises a reformer for reforming fuel gas such as natural gas, town gas, methanol, LPG, or butane to hydrogen rich gas, a CO transformer for transforming carbon monoxide, the CO removing apparatus for removing the carbon monoxide, the process gas burner for burning hydrogen until each reactor becomes stable in starting operation, the fuel cell for generating power using hydrogen, the water tank for storing water for cooling the fuel cell, and the heat exchanger for recovering heat exhaust gas of the reformer, the fuel cell, or the process gas burner and heating the water to produce hot water, and the hot water reserving tank for reserving hot water.

The power generating equipment has a line for circulating and feeding of hot water A to the said water tank for heat exchange. The hot water A is produced by exchanging heat in the heat exchanger connected to the process gas burner for heating or cooling the water in the water tank if necessary. When the water temperature of the water tank becomes a predetermined temperature or more, the hot water A is circulated and fed to the line to cool the water in the water tank, or a fan for feeding air for combustion to the process gas burner is operated to decrease the temperature of the hot water A using the heat exchanger connected to the process gas burner as a cooler and the cooled hot water A is circulated and fed to the line to cool the water in the water tank. Thus, the temperature of the hot water in the water tank is kept within a range of the predetermined temperature.

The proton-exchange membrane fuel cell power generating equipment in accordance with the claim 2 of the present invention is a proton-exchange membrane fuel cell power generating equipment in accordance with claim 1 where the process gas burner is burned in starting time of a fuel cell, the hot water A is circulated and fed to the line to heat the water in the water tank when the water temperature of the water tank is lower than the predetermined temperature, and the hot water A is not fed to the water tank when the water temperature of the water tank is the predetermined temperature or higher.

The proton-exchange membrane fuel cell power generating equipment in accordance with the claim 3 of the present invention is the proton-exchange membrane fuel cell power generating equipment in accordance with claim 1 where the process gas burner is stopped during the power generation, the hot water A is not fed to the line when the water temperature of the water tank is lower than the predetermined temperature, and the hot water A is fed to the water tank and recover heat when the water temperature of the water tank is just the predetermined temperature or higher, thereby keeping constant temperature of the hot water in the water tank.

The proton-exchange membrane fuel cell power generating equipment in accordance with the claim 4 of the present invention is the proton-exchange membrane fuel cell power generating equipment in accordance with claim 1 where, when the process gas burner does not operate during the power generation and in the case of the hot water reserving tank is filled with hot water, the hot water A is not fed to the line when the water temperature of the water tank is lower than the predetermined temperature, and only the fan for feeding air for combustion to the process gas burner is operated when the water temperature of the water tank is the predetermined temperature or higher to decrease the temperature of the hot water A using the heat exchanger connected to the process gas burner as the cooler, and the cooled hot water A is fed to the line to cool the hot water in the water tank. Thus, the temperature of the hot water in the water tank is kept within the range of the predetermined temperature.

In the proton-exchange membrane fuel cell power generating equipment in accordance with the claim 5 of the present invention, even when a hot water reserving tank 50 is filled with hot water of a predetermined temperature during an operation and the hot water is not discharged to the outside through the hot water supply pipe 62, only a fan for feeding air for combustion to the process gas burner is operated to decrease the temperature of the hot water A using the heat exchanger connected to the process gas burner as the cooler, then the cooled hot water A is fed to the line to cool the hot water in the water tank. The temperature of the coolant in the fuel cell 6 can be kept within a range of a predetermined range of temperature without additional installing of any other cooling apparatus such as a radiator without stopping operation.

The power generating equipment has a control system when a water system may freeze which prevents the freezing by detecting any possibility of freezing during stop operation and burns the process gas burner or by circulation of hot water from reserving tank in a part or the whole of the water system instead of burning of the process gas burner.

The proton-exchange membrane fuel cell power generating equipment in accordance with the claim 6 of the present invention prevents freezing by operating a pump for feeding coolant to a cooling section of a fuel cell to heat a fuel cell body by circulating water in a water tank.

The proton-exchange membrane fuel cell power generating equipment in accordance with the claim 7 of the present invention stops a process gas burner during combustion of it as well as stops an exhaust heat recovery pump when the temperature of water tank or fuel cell body is just a predetermined temperature or higher.

In the proton-exchange membrane fuel cell power generating equipment in accordance with the claim 8 of the present invention, the means for detecting freezing possibility is a means for detecting a temperature of a water tank. When the temperature of the water tank is a level of predetermined temperature or lower, a process gas burner is burned to heat hot water in a hot water reserving tank and the hot water is circulated in a part or the whole of the water system to prevent freezing.

In the proton-exchange membrane fuel cell power generating equipment in accordance with the claim 9 of the present invention, a means for detecting freezing possibility is a means for detecting a temperature of a fuel cell body. When the temperature of a fuel cell body is a predetermined temperature level or lower, a process gas burner is burned to heat hot water in a hot water reserving tank and the hot water is circulated in a part or the whole of the water system to prevent freezing.

In the proton-exchange membrane fuel cell power generating equipment in accordance with the claim 10 of the present invention, a means for detecting freezing possibility is a means for detecting a temperature of an atmosphere in the power generating equipment. When the temperature of the atmosphere is a predetermined temperature level or lower, a process gas burner is burned to heat hot water in a hot water reserving tank and the hot water is circulated in a part or the whole of the water system to prevent freezing.

The proton-exchange membrane fuel cell power generating equipment of the present invention has the following control system. When the temperature of the water, for example, in the water tank 21 lowers to about 2 °C during stop operation of the power generating equipment or the temperature of the fuel cell 6 body or the temperature of the atmosphere in the power generating equipment lowers to risky condition of freezing, the control system detects a possibility of freezing, it burns the process gas burner 34, heats hot water in the hot water reserving tank 50, circulates hot water in a part or the whole of the water system including the water tank 21, and operates the pump 48 to circulate hot water in the cooling section 6c of the fuel cell 6 to increase the temperature of the fuel cell 6 body, thereby preventing freezing. Otherwise, the control system does not burn the process gas burner 34, but circulates the hot water in the hot water reserving tank 50, thereby preventing freezing. Therefore, the power generating equipment can be prevented from damages due to freezing of the fuel cell 6 body, the water tank 21, the fuel cell 6, the hot water reserving tank 50, and the water system including heat exchangers 32, 46, 71, piping system, valves, pumps, and pipes, saving maintenance man power in a cold region or in the winter season, improving reliability, and being used as, for example, a small power supply for household use in the cold region.

The exhaust heat recovering method of the fuel cell power generating equipment is provided in which the hot water reserving tank and the plural heat exchangers installed in the fuel cell power generating equipment are interconnected by piping to form a loop-like duct, then water in the hot water reserving tank is passed through sequentially to the heat exchangers via the duct to heat the water.

In this exhaust heat recovering method of the fuel cell power generating equipment, the water is passed through the heat exchangers in the order from lower temperature level to higher temperature level in the heat exchange process with water from the hot water reserving tank. The heat exchangers comprise the first heat exchanger for heat exchange with combustion exhaust gas from the reformer burner of the reforming apparatus, the second heat exchanger for heat exchange with combustion exhaust gas from the PG burner, the third heat exchanger installed in relation to the fuel cell, and the fourth heat exchanger installed in relation to a duct into which the combustion exhaust gases from the reformer burner and the PG burner and the non-reacted oxygen gas from the fuel cell flow.

In the above mentioned fuel cell power generating equipment, a loop-like duct is formed that extends from die hot water reserving tank, through the fourth heat exchanger, the third heat exchanger, and the first heat exchanger in this order, back to the hot water reserving tank. Then, the first selector valve is installed between the heat exchanger and the hot water reserving tank in the duct to make a branch duct which is branched from an intermediate part between the first selector valve and the first heat exchanger connecting the water tank for supplying the coolant to the fuel cell and the hot water reserving tank. On the upstream side of the water tank in the branch duct, the second selector valve is installed. When the water temperature of the water tank is just the predetermined temperature level or higher during power generation of the fuel cell, the first selector valve is closed and the second selector valve is opened to pass water through the branch duct to recover the heat from the water tank. When the water temperature of the water tank is the predetermined temperature level or lower, the first selector valve is opened and the second selector valve is closed not to supply water to the branch duct.

In the present invention, instead of the structure in which the hot water reserving tank is connected to the plural heat exchangers in each to form the plural circuits, a series of loop-like ducts to connect plural heat exchangers are configured and the water is supplied sequentially from a heat exchanger of lower temperature toward a heat exchanger of higher temperature. Therefore, even though the temperature of water from the hot water reserving tank fluctuates, heat exchanging efficiency of each heat exchanger could be increased.

### BRIEF DESCRIPTION OF THE DRAWINGS

Fig. 1 is the system diagram of the proton-exchange membrane fuel cell power generating equipment in accordance with an exemplary embodiment of the present invention.
Fig. 2 is the explanatory drawing of an exemplary embodiment of the hot water flow in the heat recovery device in the proton-exchange membrane fuel cell power generating equipment of Fig. 1.
Fig. 3 is the explanatory drawing of another exemplary embodiment of the hot water flow in the heat recovery device in the proton-exchange membrane fuel cell power generating equipment of Fig. 1.
Fig. 4 is the explanatory drawing of an exemplary embodiment of the hot water flow for preventing freezing in the proton-exchange membrane fuel cell power generating equipment of Fig. 1.
Fig. 5 is the explanatory drawing of another exemplary embodiment of the hot water flow for preventing freezing in the proton-exchange membrane fuel cell power generating equipment of Fig. 1.
Fig. 6 is the block diagram of an essential part of the heat recovery route showing another exemplary embodiment of the exhaust heat recovering method.
Fig. 7 is the system diagram of a conventional proton-exchange membrane fuel cell power generating equipment

### BEST MODE FOR CARRYING OUT THE INVENTION

The exemplary embodiments of the present invention are described in detail with reference to the accompanying drawings.

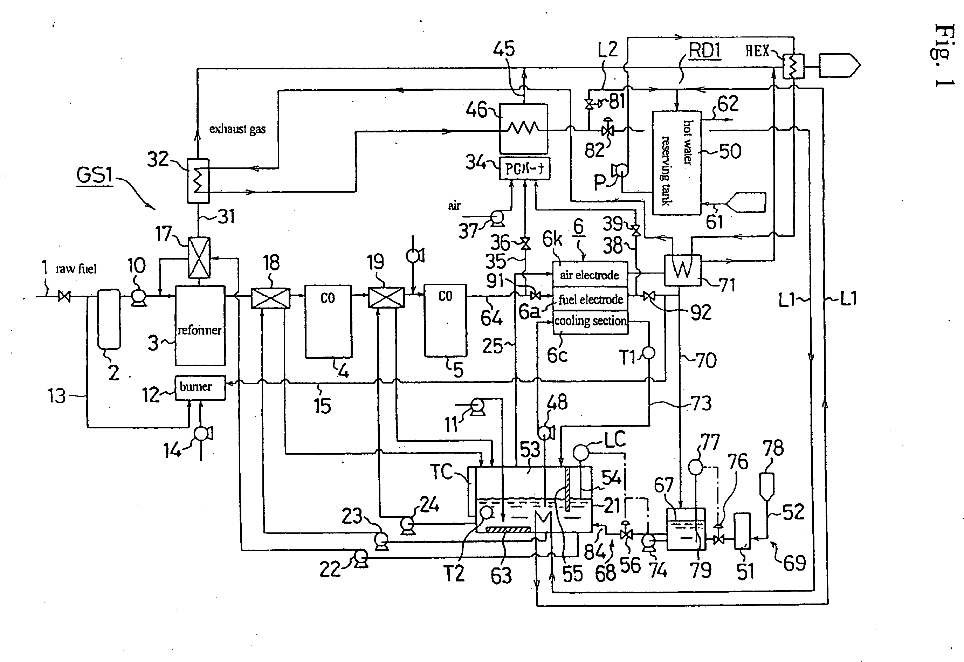

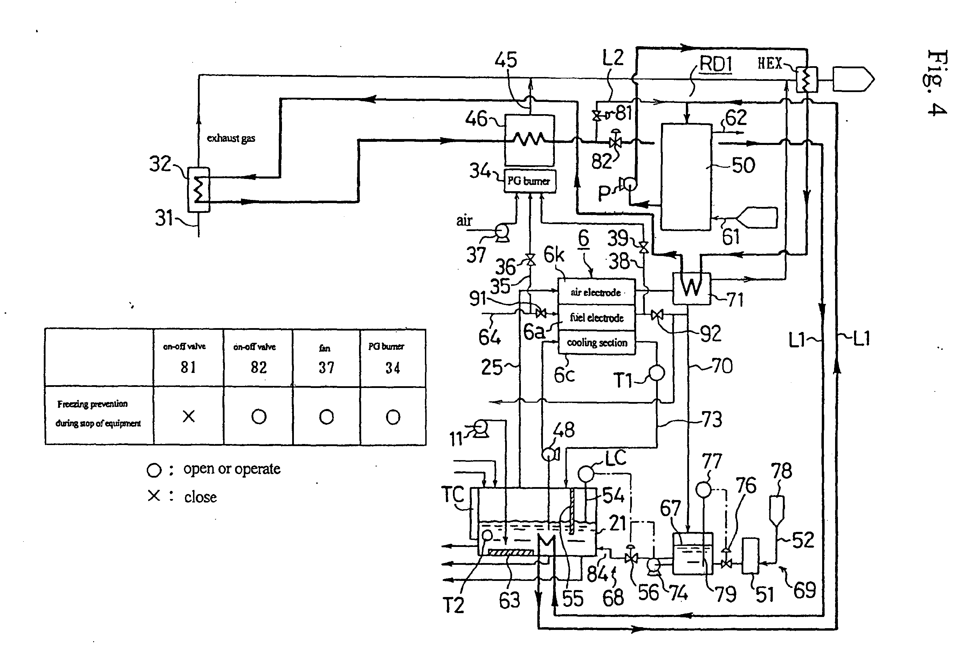

Fig. 1 to Fig. 6 illustrate the proton-exchange membrane fuel cell power generating equipment in accordance with an exemplary embodiment of the present invention.

In Fig. 1 to Fig. 6, As for elements similar to those in Fig. 7 having the same reference numbers, duplicated descriptions for those elements are omitted.

The proton-exchange membrane fuel cell power generating equipment GS1 of the present invention shown in Fig. 1 comprises the heat exchanger HEX at the back of the heat exchanger 71 for gas exhausted from the heat exchanger 32 of the exhaust system 31, the heat exchanger 46 of the exhaust system 45, and the air electrode 6k of the fuel cell 6, as well as the line L1 for transmitting the hot water A into the water tank 21 with heat exchange function whose water stored in the hot water reserving tank 50 recovers exhaust heat through its circulating among the heat exchanger HEX, the heat exchangers 71, 32, 46, by the help of the pump P. The power generating equipment has the line L2 for feeding the hot water A to the hot water reserving tank 50 when the hot water A does not need to be fed to the water tank 21 through the line L1. The line L1 has the on-off valve 82, and the line L2 has the on-off valve 81. A water pipe 73 has a thermometer T1 indicating temperature of coolant as well as the thermometer T2 for detecting the temperature of the water tank 21. The proton-exchange membrane fuel cell power generating equipment GS1 of the present invention is similar to the proton-exchange membrane fuel cell power generating equipment GS shown in Fig. 7 except that the power generating equipment GS1 has such a heat recovery device RD1.

### 1. (In starting operation of the proton-exchange membrane fuel cell power generating equipment GS1 of the present invention)

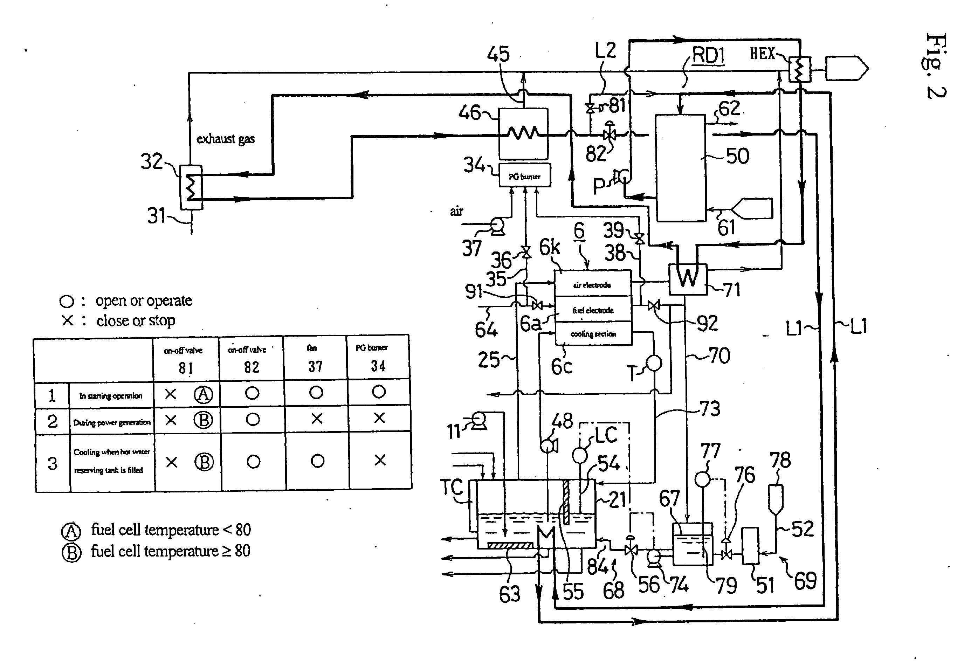

In starting operation of the fuel cell 6, the fan 37 and the PG burner 34 are activated. When the water temperature (water temperature measured by the thermometer T) of the water tank 21 is lower than the predetermined temperature (for example, less than 80 °C), the on-off valve 81 is closed and the on-off valve 82 is opened to circulate and feed the hot water A of recovering exhaust heat into the line L1 to heat the water in the water tank 21 (see Fig. 2, the table in the Fig. 2 indicates opening/closing states of the on-off valves 81, 82 and operating or stopping of the fan 37 and the PG burner 34).

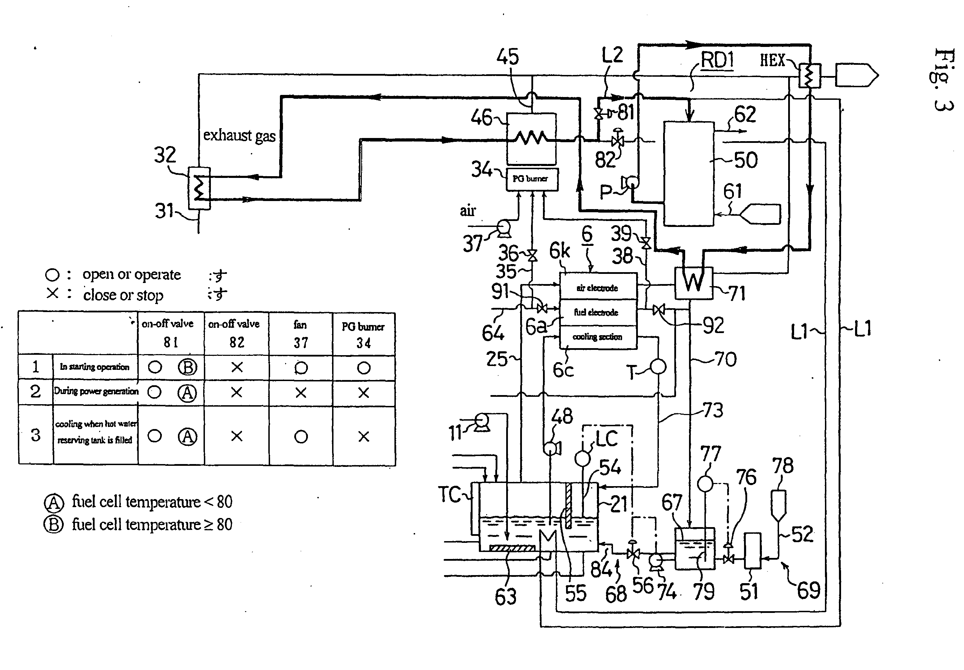

In starting operation of the fuel cell 6, the fan 37 and the PG burner 34 are activated. When the water temperature (water temperature measured by the thermometer T) of the water tank 21 is just the predetermined temperature or higher (for example, 80 °C or higher), the on-off valve 81 is opened and the on-off valve 82 is closed to feed the hot water A of recovering exhaust heat to the hot water reserving tank 50 through the line L2 (see Fig. 3, the table in the Fig. 3 indicates opening/closing states of the on-off valves 81, 82 and operating or stopping of the fan 37 and the PG burner 34).

### 2. (During power generation by the proton-exchange membrane fuel cell power generating equipment GS1 of the present invention)

During the power generation of the fuel cell 6, the fan 37 and the PG burner 34 are stopped. When the hot water reserving tank 50 is not filled with hot water and the water temperature (water temperature measured by the thermometer T) of the water tank 21 is lower than the predetermined temperature (for example, lower than 80 °C), the on-off valve 81 is opened and the on-off valve 82 is closed not to feed the hot water A to the line L1 but to feed the hot water A of recovering exhaust heat to the hot water reserving tank 50 through the line L2 (see Fig. 3, the table in the Fig. 3 indicates opening/closing states of the on-off valve 81, 82 and operating or stopping of the fan 37 and the PG burner 34).

During the power generation of the fuel cell 6, the fan 37 and the PG burner 34 are stopped. When the hot water reserving tank 50 is not filled with hot water and the water temperature (water temperature measured by the thermometer T) of the water tank 21 is just the predetermined temperature or higher (for example, 80 °C or higher), the on-off valve 81 is closed and the on-off valve 82 is opened to circulate and feed the hot water A to the line L1 to cool the water in the water tank 21 (see Fig. 2, the table in the Fig. 2 indicates opening/closing states of the on-off valve 81,82 and operating or stopping of the fan 37 and the PG burner 34).

### 3. (During power generation by the proton-exchange membrane fuel cell power generating equipment GS1 of the present invention, and the hot water reserving tank 50 is filled with hot water)

When the hot water reserving tank 50 is filled with hot water of a predetermined temperature during the power generation of the fuel cell 6 and the hot water is not supplied to the outside through the hot water supply pipe 62, exhaust heat of the PEFC equipment GS1 cannot be recovered. Therefore, when the water temperature (water temperature measured by the thermometer T) of the water tank 21 is just the predetermined temperature or higher (for example, 80 °C or higher), only the fan 37 for feeding air for combustion to the PG burner 34 is operated to decrease the temperature of the hot water A using the heat exchanger 46 connected to the PG burner 34 as the cooler, and the cooled hot water A is circulated and fed to the line L1 by closing the on-off valve 81 and opening the on-off valve 82 to cool the water in the water talk 21 (see Fig. 2, the table in the Fig. 2 indicates opening/closing states of the on-off valve 81, 82 and operating or stopping of the fan 37 and the PG burner 34).

When the water temperature (water temperature measured by the thermometer T) of the water tank 21 is lower than the predetermined temperature (for example, lower than 80°C), the on-off valve 81 is opened and the on-off valve 82 is closed not to feed the hot water A to the line L1 but to feed the hot water A of recovering exhaust heat to the hot water reserving tank 50 through the line L2 (see Fig. 3, the table in the Fig. 3 indicates opening/closing states of the on-off valves 81,82 and operating or stopping of the fan 37 and the PG burner 34).

The on-off valves 81, 82 can be opened or closed manually, and the fan 37 and the PG burner 34 can be operated or stopped manually, too. However, preferably, these operations are performed automatically with a controller (not shown).

### 4. (When water in the water tank 21 has an possibility of freezing during stop operation of the proton-exchange membrane fuel cell power generating equipment GS1 of the present invention)

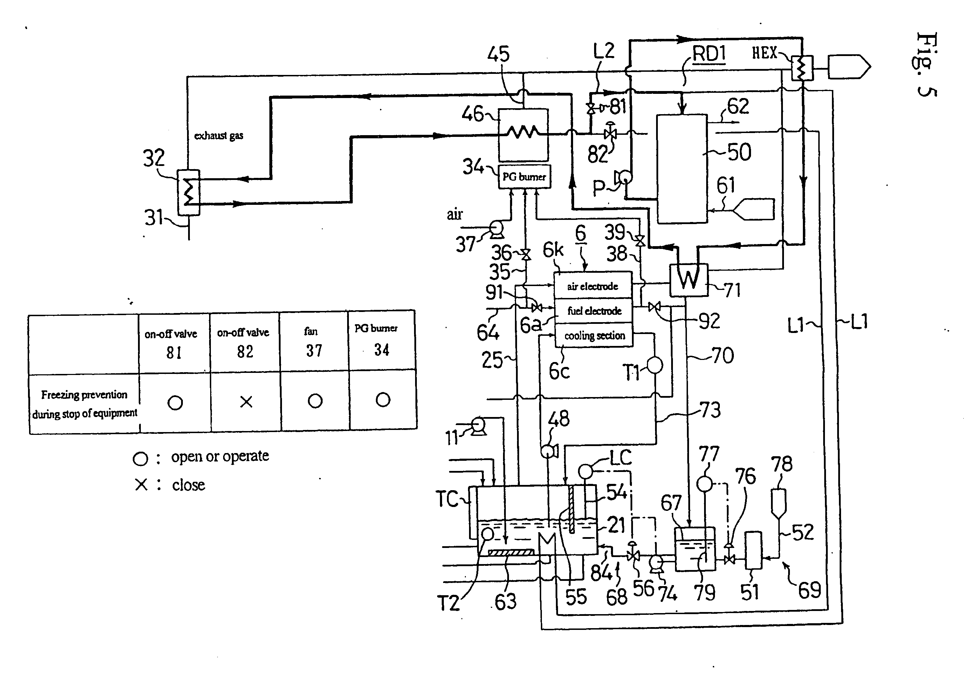

When the water temperature (water temperature always monitored and measured by the thermometer T2) of the water tank 21 may become the predetermined temperature or lower (for example, 2°C or lower) to have a possibility of freezing in Fig. 5, a controller (not shown) sends a signal to the PG burner 34, the fan 37, the on-off valves 81, 82, and the pump P to activate the fan 37 and the PG burner 34 to ignite. In the same time, closes the on-off valve 81 of the line L2, opens the on-off valve 82 of the line L1, and operates the pump P to circulate the hot water of the hot water reserving tank 50 including the hot water A whose heat is temperature is increased by the recovery of heat at the heat exchanger 46 connected to the PG burner 34 resulting in heating the temperature of the water of the water tank 21 (see Fig. 5, the wide and solid line shows flow of the hot water, and the table indicates opening/closing states of the on-off valves 81, 82 and operating states of the fan 37 and the PG burner 34).

When the temperature detecting means (thermometer) (not shown) for the fuel cell 6 body shows the predetermined temperature or lower (for example, 2°C or lower) to have a possibility of freezing the fuel cell 6 body, the PG burner 34 is activated to circulate the hot water and the controller (not shown) sends a signal to the pump 48 to operate the pump 48 to circulate the hot water in a cooling section 6c of the fuel cell 6 to increase the temperature of the fuel cell 6 body to prevent from freezing.

When the temperature detecting means (thermometer) (not shown) for the temperature of the atmosphere in the fuel cell power generating equipment GS1 may shows the predetermined temperature or lower (for example, 2°C or lower) to have a possibility of freezing the water system, the PG burner 34 is activated to circulate the hot water and the controller (not shown) sends a signal to the pump 48 to operate the pump 48 to circulate the hot water in a cooling section 6c of the fuel cell 6 to increase the temperature of the fuel cell 6 body to prevent from freezing.

The operation of the process gas burner 34 has been described in the preceding note. However, the hot water of the hot water reserving tank 50 could be circulated in a part or the whole of the water system without burning the process gas burner 34 to prevent from freezing.

When the water temperature (water temperature measured by the thermometer T2) of the water tank 21 becomes 10 °C or higher for example, a controller (not shown) sends a signal to the PG burner 34, the fan 37, and the pump P (exhaust heat recovery pump) to stop operation of them. Thus, the pump P, the PG burner 34, and the fan 37 are intermittently effective for prevention of freezing.

### 5. (When water in the water system including the hot water reserving tank 50 have a possibility of freezing during stop operation of the proton-exchange membrane fuel cell power generating equipment GS1 of the present invention)

When the water temperature (water temperature always monitored and measured by the thermometer T2) of the water tank 21 is the predetermined temperature or higher (for example, 2°C or higher) but the water temperature monitored and measured by the other thermometer in full time (not shown) installed in the water system including the hot water reserving tank 50 shows the predetermined temperature or lower (for example, 2°C or lower) to have a possibility of freezing, a controller (not shown) sends a signal to the PG burner 34, the fan 37, the on-off valves 81, 82, and the pump P to activate the fan 37 and operate the PG burner 34 to ignite, and opens the on-off valve 81 of the line L2, closes the on-off valve 82 of the line L1, and operates the pump P to circulate the hot water A of recovering heat through the heat exchanger 46 connected to the PG burner 34 for the heating of the water of the water system including the hot water reserving tank 50 (see Fig. 5, the wide and solid line shows flow of the hot water, and the table indicates opening/closing states of the on-off valves 81,82 and operating states of the fan 37 and the PG burner 34).

When the water temperature of the water system including the hot water reserving tank 50 shows 10°C or higher, for example, a controller (not shown) sends a signal to the PG burner 34 and the fan 37 to stop operation of them. Thus, the pump P, the PG burner 34, and the fan 37 are intermittently operated to prevent from freezing.

### 6. (Exhaust gas recovering method 1)

The fuel cell 6 normally operates at about 80°C, but heat generation due to an electrochemical reaction sometimes increases temperature. For preventing the temperature increase, water is supplied from the water tank 21 to the cooling section of the fuel cell 6 by the pump 48 to cool the fuel cell 6. After the cooling operation, the water is returned to the water tank 21, but a water amount in the water tank 21 gradually decreases, therefore, water is added in a certain intervals. Pure water produced by purifying procedure with ion-exchange resin 51 and reserved in the supply tank 67 is supplied from the tank in this case. Moisture (moisture including in an unreacted oxygen gas) offered from the third heat exchanger 71 is introduced into the supply tank 67, too.

During an operation of the fuel cell power generating equipment, water in the bottom of the hot water reserving tank 50 (20°C at room temperature, for example) is taken out by the pump P, and fed to the fourth heat exchanger HEX through the first duct S1. The exhaust gas passing through the fourth heat exchanger HEX is a mixed gas of the combustion exhaust gas from the reformer burner 12 in the duct 98, the combustion exhaust gas from the PG burner 34, and the non-reacted oxygen gas from the fuel cell 6. The combustion exhaust gas from the reformer burner 12 passes through a carburetor 9 and the first heat exchanger 32, so that its temperature is decreased. The combustion exhaust gas from the PG burner 34 also passes through the second heat exchanger 46, so that its temperature is decreased, too. The unreacted oxygen gas from the fuel cell 6 passes through the third heat exchanger 71, so that its temperature is decreased. Therefore, the temperature level of the mixed gas passing through the fourth heat exchanger HEX is low, about 50 - 60°C.

Water heated by the fourth heat exchanger HEX is fed to the third heat exchanger 71 through the second duct S2. Heat of the water is exchanged with the non-reacted oxygen gas exhausted from the air electrode of the fuel cell 6, and the temperature level in it is about 70 - 80°C.

For the next step, the hot water is fed to the first heat exchanger 32 through the third duct S3, and its heat is exchanged with the combustion exhaust gas passing through the first heat exchanger 32. This combustion exhaust gas is the combustion exhaust gas from the reformer burner 12, but passes through the carburetor 9. As a result, the temperature level is about 100 - 120°C.

The hot water is further fed from the first heat exchanger 32 to the second heat exchanger 46 through the fourth duct S4, and its heat is exchanged with the combustion exhaust gas from the PG burner 34. The temperature level of the second heat exchanger 46 is about 150 - 180°C. Hot water is supplied from the second heat exchanger 46 to the upper part of the hot water reserving tank 50 through the fifth duct S5. At this time, the first selector valve V1 is opened and the second selector valve V2 is closed.

The PG burner 34 is burned in an unstable state of the reformed gas in starting operation and stop operation. After the reformed gas condition would be stable, the second heat exchanger 46 does not perform heat exchange during the power generation of the fuel cell 6 due to stop operation of burning. On the other hand, combustion of the burner 12 of the reformer 3 is continued for keeping the temperature condition of catalysts filled into the reformer 3 during the power generation of the fuel cell 6 at a predetermined level. The required fuel is supplied by the feeding of the unreacted oxygen gas exhausted from the fuel electrode of the fuel cell 6 to the burner 12 as discussed above.

The water in the bottom of the hot water reserving tank 50 passes through the heat exchangers sequentially in the order from the lower temperature level to the higher temperature level to become hot of about 60 - 70°C, and is returned the upper part of the hot water reserving tank 50. In this case, as the temperature of the water is gradually increased through each heat exchanger corresponding to the temperatures condition of water respectively, heat exchanging efficiency could be very high.

### 7. (Exhaust gas recovering method 2)

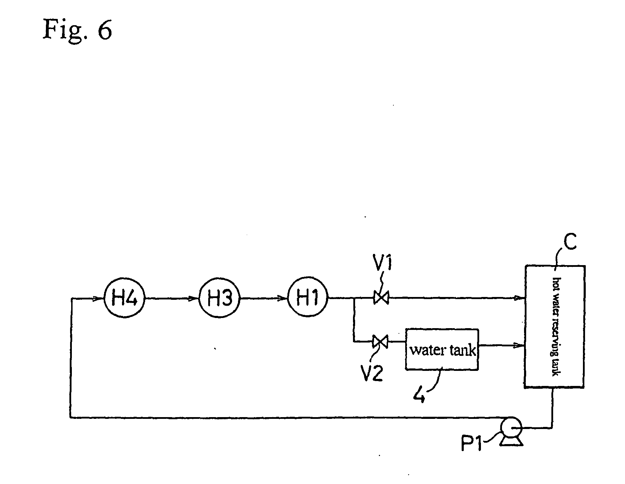

Fig. 6 shows another exemplary embodiment of the exhaust heat recovering method of the present invention, and is a block diagram of an only essential part of the structure of the fuel cell power generating equipment of Fig. 1.

The loop-like duct is formed that extends from the hot water reserving tank 50 through the fourth heat exchanger HEX, the third heat exchanger 71, and the first heat exchanger 32 in this order, then back to the hot water reserving tank 50. The first selector valve V1 is installed between the first heat exchanger 32 in the duct and the hot water reserving tank 50. The branch duct is formed from an intermediate part between the first selector valve V1 and the first heat exchanger 32 which is the bypass to supply to the fuel cell 6 with coolant from the water tank 21 and reaches the hot water reserving tank 50. And the second selector valve V2 is installed on the upstream side of the water tank 21 in the branch duct.

When the water temperature of the water tank 21 is a predetermined temperature (for example, 80 °C) or higher during the power generation of the fuel cell 6, the first selector valve V1 is closed and simultaneously the second selector valve V2 is opened. The water taken out of the bottom of the hot water reserving tank 50 by the pump P is fed through the fourth heat exchanger HEX, the third heat exchanger 71, the first heat exchanger 32 in this order, and then the water tank 21 through the branch duct, then returns back to the hot water reserving tank 50. In this way, circulation of hot water in reserving tank 50 allows to recover the heat of the water tank 21.

When the water temperature of the water tank 21 is the predetermined temperature (for example, 76 °C) or lower, on the contrary, the first selector valve V1 is opened and simultaneously the second selector valve V2 is closed. The water taken out of the bottom of the hot water reserving tank 50 is fed by the pump P to the fourth heat exchanger HEX, the third heat exchanger 71, and the first heat exchanger 32 in this order, then returns back to the hot water reserving tank 50, and it is not fed to the water tank 21 through the branch duct In other words, heat is not recovered from the water tank 21 at temperature condition of 76 °C or lower.

In stop operation of the fuel cell power generating equipment, the fuel cell 6 is cooled, the water temperature in the water tank 21 decreases, and the water is fed into the water tank 21 in the winter season. For supplying hot water to the water tank 21, the first selector valve V1 is closed and the second selector valve V2 is opened to guide hot water to the branch duct to feed the hot water into the water tank 21. Then, the hot water is returned to the hot water reserving tank 50.

When the water temperature of the water tank 21 rises to a certain temperature (for example, 76 °C) during the power generation of the fuel cell 6, the selector valve V2 is closed and the selector valve V1 is opened to stop hot water supply to the water tank 21 and feed the hot water to the hot water reserving tank 50. When the water temperature of the water tank 21 rises to a certain temperature (for example, 80 °C), the selector valve V2 is opened and the selector valve V1 is closed to feed the hot water to the water tank 21, the heat in the water tank 21 is recovered, and the recovered heat is fed to the upper part of the hot water reserving tank 50.

When the water of the water tank 21 is heated, air fed through the water tank 21 to the air electrode of the fuel cell 6 is heated resulting in heating the fuel cell 6 in a short time to shorten time of starting-up time before operation.

The description of the above embodiments is used to describe the present invention, not to limit the invention described in the claims or reduce any covering range. Each element of the present invention is not limited to the above embodiments and it can be deformed in several coverage in a technical scope according to the claims.

The proton-exchange membrane fuel cell power generating equipment of the present invention has a configuration of a cogeneration system for power generation and heat utilization. This means this invention has an advantages not only for the power generating efficiency of a fuel cell, but also for an economical use of effectively recycled water in the system. Additionally, temperature of the coolant of the fuel cell could be kept in the predetermined temperature range without stopping the power generating equipment or any installing of cooling apparatus such as a radiator in the water tank even when the hot water reserving tank is filled with hot water during an operation with no supply measure of hot water to the outside through the hot water supply pipe. The power generating equipment can be thus downsized.

The proton-exchange membrane fuel cell power generating equipment in accordance with the claim 5 of the present invention require quite a simple maintenance procedure for the fuel cell and has a configuration of a cogeneration system for power generation and heat utilization. This means the power generating efficiency of a fuel cell is increased and recycled water utilization in the system is quite effective. Additionally, freezing of a water system during stop operation of the equipment could be automatically prevented. Damages due to the freezing on the water tank, fuel cell, hot water reserving tank, and water system including heat exchangers, piping system, valves, pumps, and pipes caused by freezing could be prevented, too. Maintenance work in the cold region or in winter season could be minimized, and service life the equipment is extended with improved reliability.

The proton-exchange membrane fuel cell power generating equipment in accordance with the claim 5 of the present invention, advantageously, can automatically and easily prevent the freezing of the water system during the stop operation of the equipment without burning a process gas burner.

The proton-exchange membrane fuel cell power generating equipment in accordance with the claim 6 of the present invention prevents the freezing by operating a pump for feeding coolant to a cooling section of the fuel cell as well as by heating a fuel cell body by circulating water in the water tank and damages on the fuel cell body due to the freezing can be more effectively prevented.

The proton-exchange membrane fuel cell power generating equipment in accordance with the claim 7 of the present invention can stop the process gas burner, then stops the exhaust heat recovery pump when the temperature of the water tank or the fuel cell body becomes the predetermined temperature or higher. Therefore, the energy required for preventing the freezing could be extremely minimized.

In the proton-exchange membrane fuel cell power generating equipment in accordance with the claim 8 of the present invention, the detecting measure of freezing is corresponding to the measures for detecting the temperature of a water tank, it burns a process gas burner to heat hot water in a hot water reserving tank and circulates hot water in a part or the whole of the water system for the prevention of the freezing at the time when the temperature of the water tank becomes a predetermined temperature or lower. Therefore, damage on the water tank and the water system caused by freezing could be efficiently prevented.

In the proton-exchange membrane fuel cell power generating equipment in accordance with the claim 9 of the present invention, the measures of detecting freezing condition is con-esponding to the measures for detecting a temperature of the fuel cell body, it burns the process gas burner to heat hot water in the hot water reserving tank and circulates hot water in a part or the whole of the water system to prevent freezing when the temperature of the fuel cell body is the predetermined temperature or lower. Therefore, damage on the fuel cell body and the water system caused by freezing could be efficiently prevented.

In the proton-exchange membrane fuel cell power generating equipment in accordance with the claim 10 of the present invention, the measures of detecting freezing is corresponding the measures for detecting the temperature of an atmosphere in the power generating equipment, it burns the process gas burner to heat hot water in the hot water reserving tank and circulates hot water in a part or the whole of a water system to prevent freezing when the temperature of the atmosphere is the predetermined temperature or lower. Therefore, damage on the fuel cell body and the water system caused by freezing could be efficiently prevented.

The proton-exchange membrane fuel cell power generating equipment of the present invention in accordance with the claim 5 to claim 10 have not only the advantages discussed above mentioned but also the same kind advantages as that of the effect of the claim 1.

### INDUSTRIAL APPLICABILITY

In the present invention, water taken out of the bottom of the hot water reserving tank is passed along a series of loop-like ducts connecting to the plural heat exchangers. In this heating procedure, hot water in reserving tank is heated by the exhaust heat from the fuel cell power generating equipment and is arranged to transmitted to the heat exchangers sequentially in the order from the lower temperature level to the higher temperature level. As a result, heat exchanging efficiency of each heat exchanger could be quite a lot improved. Freezing of a water system during stop operation of the equipment is prevented and damages caused by freezing of the water tank, the fuel cell, the hot water reserving tank, the heat exchangers, piping system, valves, pumps, and pipes could be prevented. So, the power generating equipment is proved highly reliable and adequate as a small power supply for household use or the like. At the same time, operation of the two selector valves during power generation of the fuel cell following to the condition of water temperature in the water tank allows an efficient recovery of heat as a different energy source.

## Claims

1. A proton-exchange membrane fuel cell power generating equipment (GS1) comprising:
a reformer (3) for reforming fuel gas such as natural gas, town gas, methanol, LPG, or butane to hydrogen rich gas;
a CO transformer (4) for transforming carbon monoxide;
a CO removing apparatus (5) for removing the carbon monoxide;
a process gas burner (34) for burning hydrogen until each reactor becomes stable in starting operation;
a fuel cell (6) for generating power using hydrogen;
a water tank (21) for storing water for cooling said fuel cell (6);
a plurality of heat exchangers (32, 46, 71, HEX) for recovering heat of exhaust gas of said reformer (3), said fuel cell (6), or said process gas burner (34) and heating the water to produce hot water A; and
a hot water reserving tank (50) for reserving the hot water A,
wherein said power generating equipment (GS1) has a line (L1) for circulating and feeding hot water from the hot water reserving tank (50) to the water tank (21) for heat exchanging, the hot water A being produced by exchanging heat in said heat exchanger (46) connected to said process gas burner (34) for heating or cooling the water in said water tank (21) if necessary,
wherein, when water temperature of said water tank (21) becomes a predetermined temperature or more, the hot water A is circulated from the hot water reserving tank (50) and fed to said line (L1) to cool the water in the water tank (21), or a fan (37) for feeding air for fuel to the process gas burner (34) is operated to decrease temperature of the hot water A by using said heat exchanger (46) connected to said process gas burner (34) as a cooler and the hot water A decreased in temperature is circulated and fed to said line (L1) to cool the water in said water tank (21), thereby keeping the temperature of the water in said water tank (21) within a range of the predetermined temperature,
and said hot water reserving tank (50) is provided with hot water supply line (62) from said hot water reserving tank (50) to the outside of said hot water reserving tank (50), and said hot water reserving tank (50) and the plurality of heat exchangers (32, 46, 71, HEX) installed in said fuel cell power generating equipment (GS1) are interconnected by piping to form a loop-like duct.

2. The proton-exchange membrane fuel cell power generating equipment (GS1) according to claim 1, wherein
said process gas burner (34) is burned in starting operation of said fuel cell,
the hot water A is circulated and fed to said line (L1) to heat the water in said water tank (21) when the water temperature of said water tank (21) is lower than the predetermined temperature, and
the hot water A is not fed to said water tank (21) when the water temperature of said water tank (21) is the predetermined temperature or higher.

3. The proton-exchange membrane fuel cell power generating equipment (GS1) according to claim 1, wherein
said process gas burner (34) is stopped during power generation of said fuel cell (6), and
the hot water A is not fed to said line (L1) when the water temperature of said water tank (21) is lower than the predetermined temperature, and the hot water A is fed to said water tank (21) to recover heat when the water temperature of said water tank (21) is the predetermined temperature or higher, thereby keeping the temperature constant of the water in said water tank (21).

4. The proton-exchange membrane fuel cell power generating equipment (GS1) according to claim 1, wherein,
when said process gas burner (34) does not operate during power generation and said hot water reserving tank (50) is filled with hot water, the hot water A is not fed to said line (L1) when the water temperature of said water tank (21) is lower than the predetermined temperature, and
only the fan (37) for feeding air for fuel to said process gas burner (34) is operated to decrease temperature of the hot water A by using said heat exchanger (46) connected to said process gas burner (34) as the cooler for the hot water A, and
the cooled hot water A is fed to said line (L1) to cool the water in said water tank (21) when the water temperature of said water tank (21) is the predetermined temperature or higher, thereby keeping the water temperature of said water tank (21) within the range of the predetermined temperature.

5. The proton-exchange membrane fuel cell power generating equipment (GS1) according to claim 1, wherein said fuel cell power generating equipment (GS1) comprises heat transferring pumps (P, 23, 24, 48) for heat exchanging between said water stored in the water tank (21) and said hot water reserved in the hot water reserving tank (50).

6. The proton-exchange membrane fuel cell power generating equipment (GS1) according to any one of claims 1 to 5, wherein
said fuel cell power generating equipment (GS1) comprises said heat transferring pump (48) and a line (73) for feeding and circulating the water in said water tank (21) from said water tank (21) to a cooling section (6c) of said fuel cell (6), and the water in said water tank (21) is circulated to heat said fuel cell (6), thereby preventing freezing.

7. The proton-exchange membrane fuel cell power generating equipment (GS1) according to claim 5 or claim 6, wherein,
when temperature of said water tank (21) or said fuel cell (6) is a predetermined temperature or higher, said process gas burner (34) is stopped if said process gas burner (34) is burned, and said heat transferring pump (P) is stopped.

8. The proton-exchange membrane fuel cell power generating equipment (GS1) according to claim 5, claim 6, or claim 7, wherein
said fuel cell power generating equipment (GS1) comprises a means (T2) for detecting freezing by detecting temperature of said water tank (21), and
when the temperature of said water tank (21) is a predetermined temperature or lower, said process gas burner (34) is burned to heat the hot water in said hot water reserving tank (50) and the hot water is circulated in a part or a whole of a water system comprising at least said water tank (21), said hot water reserving
tank (50), said plurality of heat exchangers (32, 46, 71, HEX), said line (L1), said heat transferring pump (P), a line (L2) for feeding the hot water A to the hot water reserving tank (50) and on-off valves (81, 82) to prevent freezing.

9. The proton-exchange membrane fuel cell power generating equipment (GS1) according to claim 5, claim 6, claim 7, or claim 8, wherein
said fuel cell power generating equipment (GS1) comprises a means for detecting freezing by detecting temperature of said fuel cell (6), and
when the temperature of the fuel cell (6) is a predetermined temperature or lower, said process gas burner (34) is burned to heat the hot water A in said hot water reserving tank (50) and the hot water is circulated in a part or a whole of a water system comprising at least said water tank (21), said hot water reserving tank (50), said plurality of heat exchangers (32, 46, 71, HEX), said line (L1), said heat transferring pump (P), a line (L2) for feeding the hot water A to the hot water reserving tank (50) and on-off valves (81, 82) to prevent freezing.

10. The proton-exchange membrane fuel cell power generating equipment (GS1) according to claim 5, claim 6, claim 7, claim 8, or claim 9, wherein
said fuel cell power generating equipment (GS1) comprises a means for detecting freezing by detecting temperature of an atmosphere in said power generating equipment (GS1), and
when the temperature of the atmosphere is a predetermined temperature or lower, said process gas burner (34) is burned to heat the hot water in said hot water reserving tank (50) and the hot water is circulated in a part or a whole of a water system comprising at least said water tank (21), said hot water reserving tank (50), said plurality of heat exchangers (32, 46, 71, HEX), said line (L1), said heat transferring pump (P), a line (L2) for feeding the hot water A to the hot water reserving tank (50) and on-off valves (81, 82) to prevent freezing.

## Patentansprüche

1. Protonenaustauschmembran-Brennstoffzellen-Stromerzeugungsausrüstung (GS1), die Folgendes umfasst:
einen Reformer (3) zum Reformieren von Brennstoffgas, wie etwa Erdgas, Stadtgas, Methanol, LPG oder Butan in wasserstoffreiches Gas;
einen CO-Transformer (4) zum Transformieren von Kohlenstoffmonoxid;
einen CO-Entfernungsapparat (5) zum Entfernen des Kohlenstoffmonoxids;
einen Prozessgasbrenner (34) zum Verbrennen von Wasserstoff, bis jeder Reaktor beim Startbetrieb stabil wird;
eine Brennstoffzelle (6) zur Stromerzeugung unter Verwendung von Wasserstoff;
einen Wassertank (21) zum Speichern von Wasser zum Kühlen der Brennstoffzelle (6);
eine Anzahl von Wärmetauschern (32, 46, 71, HEX) zum Rückgewinnen von Wärme des Abgases des Reformers (3), der Brennstoffzelle (6) oder des Prozessgasbrenners (34) und Erhitzen des Wassers zum Erzeugen von Heißwasser A; und
einen Heißwasserreservetank (50) zum Aufbewahren des Heißwassers A,
wobei die Stromerzeugungsausrüstung (GS1) eine Leitung (L1) zum Umwälzen und Zuführen von heißem Wasser aus dem Heißwasserreservetank (50) zu dem Wassertank (21) zum Wärmetausch aufweist und das Heißwasser A durch Wärmetausch in dem Wärmetauscher (46), der mit dem Prozessgasbrenner (34) verbunden ist, zum Heizen oder Kühlen des Wassers in dem Wassertank (21), falls nötig, hergestellt wird,
wobei, wenn die Wassertemperatur des Wassertanks (21) eine vorbestimmte Temperatur oder höher wird, das Heißwasser A aus dem Heißwasserreservetank (50) umgewälzt wird und der Leitung (L1) zugeführt wird, um das Wasser in dem Wassertank (21) zu Kühlen, oder ein Gebläse (37) zum Zuführen von Luft für den Brennstoff zu dem Prozessgasbrenner (34) betrieben wird, um die Temperatur des
Heißwassers A zu verringern durch Verwendung des Wärmetauschers (46), der mit dem Prozessgasbrenner (34) verbunden ist, als ein Kühler, und das heiße Wasser A, dessen Temperatur abgenommen hat, umgewälzt wird und der Leitung (L1) zugeführt wird, um das Wasser in dem Wassertank (21) zu kühlen, wodurch die Temperatur des Wassers in dem Wassertank (21) innerhalb eines Bereiches der vorbestimmten Temperatur gehalten wird,
und der Heißwasserreservetank (50) mit einer Heißwasserzufuhrleitung (62) von dem Heißwasserreservetank (50) zu der Außenseite des Heißwasserreservetanks (50) versehen ist und der Heißwasserreservetank (50) und die Anzahl von Wärmetauschern (32, 46, 71, HEX), die in der Brennstoffzellen-Stromerzeugungsausrüstung (GS1) angebracht sind, durch Verrohrung verbunden sind, sodass sie einen schleifenähnlichen Kanal bilden.

2. Protonenaustauschmembran-Brennstoffzellen-Stromerzeugungsausrüstung (GS1) gemäß Anspruch 1, wobei
der Prozessgasbrenner (34) beim Startbetrieb der Brennstoffzelle brennt,
das Heißwasser A umgewälzt und der Leitung (L1) zum Heizen des Wassers in dem Wassertank (21) zugeführt wird, wenn die Wassertemperatur des Wassertanks (21) niedriger als die vorbestimmte Temperatur ist, und
das Heißwasser A dem Wassertank (21) nicht zugeführt wird, wenn die Wassertemperatur des Wassertanks (21) die vorbestimmte Temperatur oder höher ist.

3. Protonenaustauschmembran-Brennstoffzellen-Stromerzeugungsausrüstung (GS1) gemäß Anspruch 1, wobei
der Prozessgasbrenner (34) während der Stromerzeugung der Brennstoffzelle (6) angehalten wird und
das Heißwasser A der Leitung (L1) nicht zugeführt wird, wenn die Wassertemperatur des Wassertanks (21) niedriger als die vorbestimmte Temperatur ist, und das Heißwasser A dem Wassertank (21) zugeführt wird, um Wärme zurückzugewinnen, wenn die Wassertemperatur des Wassertanks (21) die vorbestimmte Temperatur oder höher ist, sodass die Temperatur des Wassers in dem Wassertank (21) konstant gehalten wird.

4. Protonenaustauschmembran-Brennstoffzellen-Stromerzeugungsausrüstung (GS1) gemäß Anspruch 1, wobei,
wenn der Prozessgasbrenner (34) während der Stromerzeugung nicht betrieben wird und der Heißwasserreservetank (50) mit Heißwasser gefüllt ist, das Heißwasser A der Leitung (L1) nicht zugeführt wird, wenn die Wassertemperatur des Wassertanks (21) niedriger als die vorbestimmte Temperatur ist, und
nur das Gebläse (37) zum Zuführen von Luft für Brennstoff zu dem Prozessgasbrenner (34) betrieben wird, um die Temperatur des Heißwassers A durch Verwendung des Wärmetauschers (46), der mit dem Prozessgasbrenner (34) verbunden ist, als Kühler für das Heißwasser A zu verringern, und
das gekühlte Heißwasser A der Leitung (L1) zum Kühlen des Wassers in dem Wassertank (21) zugeführt wird, wenn die Wassertemperatur des Wassertanks (21) die vorbestimmte Temperatur oder höher ist, wodurch die Wassertemperatur des Wassertanks (21) innerhalb des Bereichs der vorbestimmten Temperatur gehalten wird.

5. Protonenaustauschmembran-Brennstoffzellen-Stromerzeugungsausrüstung (GS1) gemäß Anspruch 1, wobei die Brennstoffzellen-Stromerzeugungsausrüstung (GS1) Wärmeübertragungspumpen (P, 23, 24, 48) zum Wärmetausch zwischen dem Wasser, das in dem Wassertank (21) gespeichert ist, und dem Heißwasser, das in dem Heißwasserreservetank (50) aufbewahrt wird, umfasst.

6. Protonenaustauschmembran-Brennstoffzellen-Stromerzeugungsausrüstung (GS1) gemäß einem der Ansprüche 1 bis 5, wobei
die Brennstoffzellen-Stromerzeugungsausrüstung (GS1) die Wärmeübertragungspumpe (48) und eine Leitung (73) zum Zuführen und Umwälzen des Wassers in dem Wassertank (21) von dem Wassertank (21) zu einem Kühlabschnitt (6c) der Brennstoffzelle (6) umfasst und das Wasser in dem Wassertank (21) zu der Brennstoffzelle (6) umgewälzt wird, sodass Einfrieren verhindert wird.

7. Protonenaustauschmembran-Brennstoffzellen-Stromerzeugungsausrüstung (GS1) gemäß Anspruch 5 oder 6, wobei,
wenn die Temperatur des Wassertanks (21) oder der Brennstoffzelle (6) eine vorbestimmte Temperatur oder höher ist, der Prozessgasbrenner (34) angehalten wird, wenn der Prozessgasbrenner (34) brennt, und die Wärmeübertragungspumpe (P) angehalten wird.

8. Protonenaustauschmembran-Brennstoffzellen-Stromerzeugungsausrüstung (GS1) gemäß Anspruch 5, Anspruch 6 oder Anspruch 7, wobei
die Brennstoffzellen-Stromerzeugungsausrüstung (GS1) ein Mittel (T2) zum Erfassen von Einfrieren durch Erfassen der Temperatur des Wassertanks (21) umfasst und,
wenn die Temperatur des Wassertanks (21) eine vorbestimmte Temperatur oder niedriger ist, der Prozessgasbrenner (34) brennt, um das Heißwasser in dem Heißwasserreservetank (50) zu erhitzen, und das Heißwasser in einem Teil oder der Gesamtheit eines Wassersystems umgewälzt wird, das mindestens den Wassertank (21), den Heißwasserreservetank (50), die Anzahl von Wärmetauschern (32, 46, 71, HEX), die Leitung (L1), die Wärmeübertragungspumpe (P), eine Leitung (L2) zum Zuführen des Heißwassers A zu dem Heißwasserreservetank (50) und Ein-Aus-Ventile (81, 82) zum Verhindern von Einfrieren umfasst.

9. Protonenaustauschmembran-Brennstoffzellen-Stromerzeugungsausrüstung (GS1) gemäß Anspruch 5, Anspruch 6, Anspruch 7 oder Anspruch 8, wobei
die Brennstoffzellen-Stromerzeugungsausrüstung (GS1) ein Mittel zum Erfassen von Einfrieren durch Erfassen der Temperatur der Brennstoffzelle (6) umfasst und
wenn die Temperatur der Brennstoffzelle (6) eine vorbestimmte Temperatur oder niedriger ist, der Prozessgasbrenner (34) brennt, um das Heißwasser A in dem Heißwasserreservetank (50) zu erhitzen, und das Heißwasser in einem Teil oder der Gesamtheit eines Wassersystems umgewälzt wird, das mindestens den Wassertank (21), den Heißwasserreservetank (50), die Anzahl von Wärmetauschern (32, 46, 71, HEX), die Leitung (L1), die Wärmeübertragungspumpe (P), eine Leitung (L2) zum Zuführen des Heißwassers A zu dem Heißwasserreservetank (50) und Ein-Aus-Ventile (81, 82) zum Verhindern von Einfrieren umfasst.

10. Protonenaustauschmembran-Brennstoffzellen-Stromerzeugungsausrüstung (GS1) gemäß Anspruch 5, Anspruch 6, Anspruch 7, Anspruch 8 oder Anspruch 9, wobei
die Brennstoffzellen-Stromerzeugungsausrüstung (GS1) ein Mittel zum Erfassen von Einfrieren durch Erfassen der Temperatur einer Atmosphäre in der Stromerzeugungsausrüstung (GS1) umfasst und,
wenn die Temperatur der Atmosphäre eine vorbestimmte Temperatur oder niedriger ist, der Prozessgasbrenner (34) brennt, um das Heißwasser in dem Heißwasserreservetank (50) zu erhitzen, und das Heißwasser in einem Teil oder der Gesamtheit eines Wassersystems umgewälzt wird, das mindestens den Wassertank (21), den Heißwasserreservetank (50), die Anzahl von Wärmetauschern (32, 46, 71, HEX), die Leitung (L1), die Wärmeübertragungspumpe (P), eine Leitung (L2) zum Zuführen des Heißwassers A zu dem Heißwasserreservetank (50) und Ein-Aus-Ventile (81, 82) zum Verhindern von Einfrieren umfasst.

## Revendications

1. Dispositif de production d'énergie par pile à combustible à membrane à échange de protons (GS1) comprenant :
un reformeur (3) destiné à reformer un gaz combustible tel que du gaz naturel, du gaz de ville, du méthanol, du GPL, ou butane en gaz riche en hydrogène ;
un transformateur de CO (4) destiné à transformer le monoxyde de carbone ;
un dispositif d'élimination de CO (5) destiné à supprimer le monoxyde de carbone ;
un brûleur de gaz de process (34) destiné à brûler l'hydrogène jusqu'à ce que chaque réacteur devienne stable au démarrage ;
une pile à combustible (6) destinée à générer de l'énergie en utilisant de l'hydrogène ;
un réservoir à eau (21) destiné à stocker l'eau de refroidissement de ladite pile à combustible (6) ;
une pluralité d'échangeurs thermiques (32, 46, 71, HEX) destinés à récupérer la chaleur des gaz d'échappement dudit reformeur (3), de ladite pile à combustible (6), ou dudit brûleur de gaz de process (34) et à chauffer l'eau afin de produire de l'eau chaude A ; et
un réservoir d'eau chaude (50) destiné à réserver l'eau chaude A,
dans lequel ledit dispositif de production d'énergie (GS1) possède une conduite (L1) destinée à faire circuler et à fournir de l'eau chaude entre le réservoir d'eau chaude (50) et le réservoir d'eau (21) en vue de l'échange thermique, l'eau chaude A étant produite en échangeant la chaleur dans ledit échangeur thermique (46) relié audit brûleur de gaz de process (34) afin de chauffer ou de refroidir l'eau dans ledit réservoir d'eau (21) si nécessaire,
dans lequel, lorsque la température de l'eau dudit réservoir d'eau (21) atteint une température prédéterminée ou plus, l'eau chaude A est mise en circulation depuis le réservoir d'eau chaude (50) et est fournie à ladite conduite (L1) afin de refroidir l'eau dans le réservoir d'eau (21), ou un ventilateur (37) destiné à fournir de l'air pour le combustible au brûleur de gaz de process (34) est actionné afin de réduire la température de l'eau chaude A en utilisant ledit échangeur thermique (46) relié audit brûleur de gaz de process (34) comme refroidisseur, et l'eau chaude A dont la température a été réduite est mise en circulation et fournie à ladite conduite (L1) afin de refroidir l'eau dans ledit réservoir d'eau (21), maintenant ainsi la température de l'eau dans ledit réservoir d'eau (21) dans les limites de la température prédéterminée,
et ledit réservoir d'eau chaude (50) est muni d'une conduite d'alimentation en eau chaude (62) entre ledit réservoir d'eau chaude (50) et l'extérieur dudit réservoir d'eau chaude (50), et ledit réservoir d'eau chaude (50) et les échangeurs thermiques (32, 46, 71, HEX) installés dans ledit dispositif de génération d'énergie par pile à combustible (GS1) sont reliés par une tuyauterie afin de former une conduite en forme de boucle.

2. Dispositif de production d'énergie par pile à combustible à membrane à échange de protons (GS1) selon la revendication 1, dans lequel
ledit brûleur de gaz de process (34) est brûlé au démarrage de ladite pile à combustible,
l'eau chaude A est mise en circulation et fournie à ladite conduite (L1) afin de chauffer l'eau dans ledit réservoir d'eau (21) lorsque la température de l'eau dudit réservoir d'eau (21) est inférieure à la température prédéterminée, et
l'eau chaude A n'est pas fournie audit réservoir d'eau (21) lorsque la température de l'eau dudit réservoir d'eau (21) correspond à la température prédéterminée ou plus.

3. Dispositif de production d'énergie par pile à combustible à membrane à échange de protons (GS1) selon la revendication 1, dans lequel
ledit brûleur de gaz de process (34) est arrêté pendant la génération d'énergie de ladite pile à combustible (6), et
l'eau chaude A n'est pas fournie à ladite conduite (L1) lorsque la température de l'eau dudit réservoir d'eau (21) est inférieure à la température prédéterminée, et l'eau chaude A est fournie audit réservoir d'eau (21) afin de récupérer la chaleur lorsque la température de l'eau dudit réservoir d'eau (21) correspond à la température prédéterminée ou plus, maintenant ainsi la température de l'eau constante dans ledit réservoir d'eau (21).

4. Dispositif de production d'énergie par pile à combustible à membrane à échange de protons (GS1) selon la revendication 1, dans lequel
lorsque ledit brûleur de gaz de process (34) ne fonctionne pas pendant la génération d'énergie et ledit réservoir d'eau chaude (50) est rempli d'eau chaude, l'eau chaude A n'est pas fournie à ladite conduite (L1) lorsque la température de l'eau dudit réservoir d'eau (21) est inférieure à la température prédéterminée, et
seul le ventilateur (37) destiné à fournir de l'air pour le combustible audit brûleur de gaz de process (34) est actionné afin de réduire la température de l'eau chaude A en utilisant ledit échangeur thermique (46) relié audit brûleur de gaz de process (34) comme refroidisseur pour l'eau chaude A, et
l'eau chaude refroidie A est fournie à ladite conduite (L1) afin de refroidir l'eau dans ledit réservoir d'eau (21) lorsque la température de l'eau dudit réservoir d'eau (21) correspond à la température prédéterminée ou plus, maintenant ainsi la température de l'eau dudit réservoir d'eau (21) dans les limites de la température prédéterminée.

5. Dispositif de production d'énergie par pile à combustible à membrane à échange de protons (GS1) selon la revendication 1, dans lequel ledit dispositif de génération d'énergie par pile à combustible (GS1) comprend des pompes de transfert de chaleur (P, 23, 24, 48) destinées à l'échange thermique entre ladite eau stockée dans le réservoir d'eau (21) et ladite eau chaude contenue dans ledit réservoir d'eau chaude (50).

6. Dispositif de production d'énergie par pile à combustible à membrane à échange de protons (GS1) selon l'une quelconque des revendications 1 à 5, dans lequel
ledit dispositif de production d'énergie par pile à combustible (GS1) comprend ladite pompe de transfert de chaleur (48) et une conduite (73) destinée à fournir et à faire circuler l'eau dans ledit réservoir d'eau (21) entre ledit réservoir d'eau (21) et une section de refroidissement (6c) de ladite pile à combustible (6), et l'eau dans ledit réservoir d'eau (21) est mise en circulation afin de chauffer ladite pile à combustible (6), empêchant ainsi tout gel.

7. Dispositif de production d'énergie par pile à combustible à membrane à échange de protons (GS1) selon la revendication 5 ou la revendication 6, dans lequel,
lorsque la température dudit réservoir d'eau (21) ou de ladite pile à combustible (6) est une température prédéterminée ou plus, ledit brûleur de gaz de process (34) est arrêté si ledit brûleur de gaz de process (34) est brûlé, et ladite pompe de transfert de chaleur (P) est arrêtée.

8. Dispositif de production d'énergie par pile à combustible à membrane à échange de protons (GS1) selon la revendication 5, la revendication 6, ou la revendication 7, dans lequel
ledit dispositif de génération d'énergie par pile à combustible (GS1) comprend un moyen (T2) destiné à détecter le gel en détectant la température dudit réservoir d'eau (21), et
lorsque la température dudit réservoir d'eau (21) est une température prédéterminée ou moins, ledit brûleur de gaz de process (34) est brûlé afin de chauffer l'eau chaude dans ledit réservoir d'eau chaude (50) et l'eau chaude est mise en circulation dans une partie ou la totalité d'un système d'eau comprenant au moins ledit réservoir d'eau (21), ledit réservoir d'eau chaude (50), ladite pluralité d'échangeurs thermiques (32, 46, 71, HEX), ladite conduite (L1), ladite pompe de transfert de chaleur (P), une conduite (L2) destinée à fournir l'eau chaude A au réservoir d'eau chaude (50) et des soupapes on/off (81, 82) destinées à empêcher tout gel.

9. Dispositif de production d'énergie par pile à combustible à membrane à échange de protons (GS1) selon la revendication 5, la revendication 6, la revendication 7 ou la revendication 8, dans lequel
ledit dispositif de génération d'énergie par pile combustible (GS1) comprend un moyen de détection du gel en détectant la température de ladite pile à combustible (6), et
lorsque la température de la pile à combustible (6) est une température prédéterminée ou moins, ledit brûleur de gaz de process (34) est brûlé afin de chauffer l'eau chaude A dans ledit réservoir d'eau chaude (50) et l'eau chaude est mise en circulation dans une partie ou la totalité d'un système d'eau comprenant au moins ledit réservoir d'eau (21), ledit réservoir d'eau chaude (50), ladite pluralité d'échangeurs thermiques (32, 46, 71, HEX), ladite conduite (L1), ladite pompe de transfert de chaleur (P), une conduite (L2) destinée à fournir l'eau chaude A au réservoir d'eau chaude (50) et des valves on/off (81, 82) destinées à empêcher tout gel.

10. Dispositif de production d'énergie par pile à combustible à membrane à échange de protons (GS1) selon la revendication 5, la revendication 6, la revendication 7, la revendication 8 ou la revendication 9, dans lequel
ledit dispositif de génération d'énergie par pile à combustible (GS1) comprend un moyen destiné à détecter le gel en détectant la température d'une atmosphère dans ledit dispositif de génération d'énergie (GS1), et
lorsque la température de l'atmosphère est une température prédéterminée ou moins, ledit brûleur de gaz de process (34) est brûlé afin de chauffer l'eau chaude dans ledit réservoir d'eau chaude (50) et l'eau chaude est mise en circulation dans une partie ou la totalité d'un système d'eau comprenant au moins ledit réservoir d'eau (21), ledit réservoir d'eau chaude (50), ladite pluralité d'échangeurs thermiques (32, 46, 71, HEX), ladite conduite (L1), ladite pompe de transfert de chaleur (P), une conduite (L2) destinée à fournir l'eau chaude A au réservoir d'eau chaude (50) et des valves on/off (81, 82) destinées à empêcher tout gel.
